# EUROPÄISCHE PATENTSCHRIFT

(11) **EP 4 007 707 B1**
(45) Veröffentlichungstag und Bekanntmachung des Hinweises auf die Patenterteilung: **15.03.2023**
(21) Anmeldenummer: 20742220.5
(22) Anmeldetag: 15.07.2020
(51) Int. Cl.: B60K 35/00, B60K 37/06, B60J 3/04, B60N 2/876

(54) **VORRICHTUNG UND VERFAHREN ZUR STEUERUNG EINES ABSCHATTUNGSSYSTEMS FÜR EIN FAHRZEUG**
DEVICE AND METHOD FOR CONTROLLING A SHADOWING SYSTEM FOR A VEHICLE
DISPOSITIF ET PROCÉDÉ DE COMMANDE DE SYSTÈME D'OMBRAGE POUR UN VÉHICULE

(30) Priorität: 02.08.2019 DE 102019005447
(43) Veröffentlichungstag der Anmeldung: 08.06.2022
(73) Patentinhaber: Mercedes-Benz Group AG, 70372 Stuttgart (DE)
(72) Erfinder: ZEDLER, Manja, 70563 Stuttgart (DE); ZHANG-XU, Tingting, 71069 Sindelfingen (DE); KAELBERER, Thomas, 71263 Weil der Stadt (DE); STIEBERT, Fabian, 72160 Horb (DE)
(74) Vertreter: JENSEN & SON
(86) Internationale Anmeldenummer: PCT/EP2020/069931
(87) Internationale Veröffentlichungsnummer: WO 2021/023486

(56) Entgegenhaltungen:
- US-A1- 2013 286 177
- US-A1- 2018 012 562
- US-A1- 2019 346 701

## Beschreibung

Die Erfindung betrifft eine Vorrichtung und ein Verfahren zur Steuerung eines Abschattungssystems für ein Fahrzeug, insbesondere eines Kraftfahrzeugs. Abschattungssysteme für Kraftfahrzeuge sind im Stand der Technik bekannt. Derartige Abschattungssysteme dienen einerseits insbesondere dazu, das Eindringen von Sonnenlicht in den Innenraum des Fahrzeugs zu reduzieren, andererseits als optische Barriere einen Einblick in den Innenraum des Fahrzeugs von außen weitestgehend zu verhindern. Häufig verwendet werden hierzu sogenannte Sonnenrollos/Sichtschutzrollos an den Seitenscheiben sowie an der Heckscheibe eines Kraftfahrzeugs. Derartige Abschattungssysteme werden üblicherweise durch einen Fahrzeugnutzer mittels manueller Bedienung (bspw. durch Betätigung eines Wippschalters) bedient.

Aus der WO 2015/062751 A1 ist ein Verfahren zum Betreiben einer Vorrichtung zur berührungslosen Erfassung von Gegenständen und/oder Personen und von diesen ausgeführten Gesten und/oder bedienenden Vorgängen in einem Fahrzeuginnenraum bekannt, wobei die Erfassung mittels einer optischen Erfassungseinheit erfolgt. Dabei wird eine dreidimensionale Geste erfasst, wobei abhängig von der erfassten Geste eine Fahrzeugfunktion gesteuert wird. Weiteren relevanten Stand der Technik zeigt die US 2018/012562 A1.

Aufgabe der Erfindung ist es, eine Vorrichtung sowie ein Verfahren für eine nutzerfreundlichere Steuerung eines Abschattungssystems anzugeben.

Die Erfindung ergibt sich aus den Merkmalen der unabhängigen Ansprüche. Vorteilhafte Weiterbildungen und Ausgestaltungen sind Gegenstand der abhängigen Ansprüche.

Ein erster Aspekt der Erfindung betrifft eine Vorrichtung zur Steuerung eines Abschattungssystems für ein Fahrzeug, mit dem eine Heckscheibe und/oder eine oder mehrere Seitenscheiben des Fahrzeugs abschattbar/verdunkelbar sind, umfassend: ein Kamerasystem zur Erfassung von Bilddaten BD1 vom Kopf- und/oder Körperhaltung eines Fahrers des Fahrzeugs, eine Auswerteeinrichtung zur Auswertung der Bilddaten BD1, um eine Blickrichtung BR(t) des Fahrers zu ermitteln, entweder als Funktion F1 einer auf Basis der Bilddaten BD1 ermittelten aktuellen Pose POSE_{K}(t) des Kopfes und/oder der Körperhaltung des Fahrers : BR(t) = F1 (POSE_{K}(t)) und/oder als Funktion F2 von auf Basis in den Bilddaten BD1 ermittelten Augenpositionen AP(t) des Fahrers: BR(t) = F2(AP(t)), eine Steuereinheit, die dazu eingerichtet und ausgeführt ist unter folgenden Bedingungen: - die ermittelte aktuelle Blickrichtung BR(t) des Fahrers ergibt ein Blicken in einen Innenraumrückspiegel des Fahrzeugs oder ein Blicken in Richtung Heckscheibe oder ein Blicken in Richtung einer der Seitenscheiben, - ein Rückwärtsgang des Fahrzeugs ist eingelegt/aktiviert, und - das Fahrzeug ist in Betrieb/aktiviert, das Abschattungssystem derart anzusteuern, dass eine aktuelle Abschattung/Verdunkelung der Heckscheibe und/oder eine aktuelle Abschattung/Verdunkelung derjenigen Seitenscheibe, die in Blickrichtung BR(t) des Fahrers liegt, aufgehoben/abgeschaltet wird.

Mit dem Kamerasystem werden vorteilhaft 2D- oder 3D- Bilddaten BD1 erfasst. Das Kamerasystem umfasst vorteilhaft beispielsweise eine Videokamera, eine Stereokamera, eine TOF-Kamera, einen Laserscanner, einen Ultraschallsensor oder eine Kombination daraus. Weiterhin umfasst das Kamerasystem vorteilhaft eine Lichtquelle zur Beleuchtung des Fahrers. Die Lichtquelle ist vorteilhaft eine Infrarot-Lichtquelle.

Die Auswerteeinrichtung ist vorteilhaft als Bilddaten-Recheneinheit ausgeführt, die einen Prozessor sowie eine darauf laufende entsprechende Bilddaten-Auswertesoftware aufweist.

Die Ermittlung einer Blickrichtung BR(t) auf Basis einer in den Bilddaten B1 ermittelten aktuellen Pose POSE_{K}(t) des Kopfes des Fahrers oder auf Basis von in den Bilddaten BD1 ermittelten Augenpositionen AP(t) des Fahrers ist im Stand der Technik bekannt, auf den hierzu verwiesen wird.

Die vorgeschlagene Vorrichtung steuert somit das Abschattungssystem derart an, dass sofern ein Fahrer mit dem Fahrzeug rückwärtsfahren will (Bedingung: eingelegter Rückwärtsgang) und er hierzu nach hinten durch die Heckscheibe blickt, oder nach rechts oder links hinten durch die entsprechenden Seitenfenster blickt oder nach hinten durch den Rückspiegel durch die Heckscheibe blickt, eine gegebenenfalls vorhandene Abschattung/Verdunkelung der betreffenden Fenster aufgehoben/abgeschaltet wird. Dadurch hat der Fahrer einen ungehinderten Blick in Richtung hintere Umgebung des Fahrzeugs, was das Unfallpotenzial beim Rückwärtsfahren erheblich minimiert.

Eine vorteilhafte Weiterbildung der vorgeschlagenen Vorrichtung zeichnet sich dadurch aus, dass das Abschattungssystem nur dann dazu angesteuert wird, eine aktuelle Abschattung/Verdunkelung der Heckscheibe aufzuheben/abzuschalten, wenn in den Bilddaten BD1 ermittelt wird, dass der Fahrer, sofern das Fahrzeug ein Linkslenkerfahrzeug ist, über seine rechte Schulter nach hinten in Richtung Heckscheibe blickt, oder sofern das Fahrzeug ein Rechtslenkerfahrzeug ist, der Fahrer über seine linke Schulter nach hinten in Richtung Heckscheibe blickt. Dies erlaubt eine Reduzierung des Rechenaufwandes bei der Auswertung der Bilddaten BD1. Insbesondere ermöglicht die Erfassung der Bilddaten vom Kopf des Fahrers, beispielsweise die Kopfausrichtung, und der Bilddaten der Körperhaltung des Fahrers, beispielsweise ein hin zur Fahrzeugmitte gedrehter Oberkörper, eine zuverlässige Bestimmung der Blickrichtung.

Eine vorteilhafte Weiterbildung der vorgeschlagenen Vorrichtung zeichnet sich dadurch aus, dass die Steuereinheit dazu ausgeführt und eingerichtet ist, im Fall, dass die Blickrichtung BR(t) in Richtung Heckscheibe oder in Richtung Innenraumrückspiegel gerichtet ist, aktuell ausgefahrene Kopfstützen, die Sitze im Fond des Fahrzeugs zugeordnet sind, einzufahren/einzuklappen. Durch das Einfahren/Einklappen der Kopfstützen wird der Sichtbereich des Fahrers auf die rückwärtige Umgebung vergrößert, was wiederum das Unfallpotenzial beim Rückwärtsfahren minimiert.

Eine vorteilhafte Weiterbildung der vorgeschlagenen Vorrichtung zeichnet sich dadurch aus, dass das Kamerasystem dazu ausgeführt und eingerichtet ist, Bilddaten BD2 von einer Sitzbelegung SB(t) von Sitzen im Fond des Fahrzeugs zu erfassen, die Auswerteeinrichtung dazu ausgeführt und eingerichtet ist, die Bilddaten BD2 auszuwerten, um die aktuelle Sitzbelegung SB_{PERS}(t) durch Personen auf den Sitzen im Fond zu ermitteln, und die Steuereinheit dazu ausgeführt und eingerichtet ist, im Fall, dass die Blickrichtung BR(t) in Richtung Heckscheibe oder in Richtung Innenraumrückspiegel gerichtet ist, aktuell ausgefahrene Kopfstützen, die Sitzen im Fond des Fahrzeugs zugeordnet sind für diejenigen Sitze im Fond einzufahren/ einzuklappen, die nicht mit einer Person besetzt sind. Dadurch wird gewährleistet, dass Passagiere im Fond des Kraftfahrzeugs, für deren Sitze Kopfstützen ausgefahren sind, keine Komforteinbußen erdulden müssen. Sobald ein Vorwärtsgang eingelegt wird und/oder das Fahrzeug in Vorwärtsrichtung eine vorgegebene Geschwindigkeitsschwelle überschreitet, werden die Kopfstützen wieder ausgefahren. Sobald wieder eine Person im Fond sitzt werden die Kopfstützen entsprechend der Größe der Person wieder ausgefahren.

Vorteilhaft umfasst das Abschattungssystem ein oder mehrere aktorisch antreibbare Abschattungs-/Verdunkelungsrollos und/oder eine oder mehrere Scheiben mit einstellbarer Transmission.

Vorteilhaft umfasst die Vorrichtung einen Regensensor, der bei vorherrschendem Regen ein Signal erzeugt, wobei die Steuereinheit vorteilhaft dazu ausgeführt und eingerichtet ist, bei Vorliegen des Signals einen der Heckscheibe zugeordneten Scheibenwischer zu aktivieren. Durch den aktivierten Scheibenwischer wird die Sicht durch die Heckscheibe verbessert.

Eine vorteilhafte Weiterbildung der vorgeschlagenen Vorrichtung zeichnet sich dadurch aus, dass die Steuereinheit dazu ausgeführt und eingerichtet ist, eine aufgehobene/abgeschaltete Abschattung/Verdunkelung wieder herzustellen/einzuschalten, wenn im Fahrzeug ein Vorwärtsgang eingelegt wird und/oder wenn das Fahrzeug in Vorwärtsrichtung eine vorgegebene Geschwindigkeitsschwelle überschreitet oder wenn eine Zündung des Fahrzeugs auf "Aus" gestellt wird und/oder eine Parkbremse des Fahrzeugs gesetzt wird. Die Abschattung/Verdunkelung werden somit in vorteilhafter Weise automatisch in einen für den Nutzer komfortorientierten Zustand zurückgestellt. Nach den gleichen Kriterien wie bei der Wiederherstellung der Abschattung/Verdunkelung kann auch eine zuvor eingeklappte oder eingefahrene Kopfstütze wieder ausgefahren werden.

Eine vorteilhafte Weiterbildung der vorgeschlagenen Vorrichtung zeichnet sich dadurch aus, dass die Steuereinheit dazu ausgeführt und eingerichtet ist, sobald eine Person im Fond sitzt dem Sitzplatz der Person zugehörige eingefahrene oder eingeklappte Kopfstützen entsprechend einer erfassten Körpergröße der Person wieder auszufahren/auszuklappen. Das Kamerasystem ist neben der Erfassung des Kopfes eingerichtet zur Erfassung der Körpergröße, insbesondere zur Erfassung der Größe des Oberkörpers. Entsprechend der Größe des Oberkörpers der auf dem Sitz sitzenden Person ist eine zugehörige Kopfstützenposition ermittelbar, die automatisch mit Erkennen der Person eingestellt wird.

Eine vorteilhafte Weiterbildung der vorgeschlagenen Vorrichtung zeichnet sich dadurch aus, dass die Steuereinheit dazu ausgeführt und eingerichtet ist, im Fall, dass die Blickrichtung BR(t) in Richtung Heckscheibe oder in Richtung Innenraumrückspiegel gerichtet ist, eine Helligkeit einer Innenraumbeleuchtung des Fahrzeugs zu reduzieren.

Eine vorteilhafte Weiterbildung der vorgeschlagenen Vorrichtung zeichnet sich dadurch aus, dass die Steuereinheit dazu ausgeführt und eingerichtet ist, eine reduzierte Helligkeit der Innenraumbeleuchtung wieder auf den ursprünglichen Wert zu erhöhen, wenn im Fahrzeug ein Vorwärtsgang eingelegt wird und/oder wenn das Fahrzeug in Vorwärtsrichtung eine vorgegebene Geschwindigkeitsschwelle überschreitet.

Eine vorteilhafte Weiterbildung der vorgeschlagenen Vorrichtung zeichnet sich dadurch aus, dass die Steuereinheit dazu ausgeführt und eingerichtet ist, eine reduzierte Helligkeit der Innenraumbeleuchtung wieder auf den ursprünglichen Wert zu erhöhen, wenn eine Zündung des Fahrzeugs auf "Aus" gestellt wird und/oder eine Parkbremse des Fahrzeugs gesetzt wird.

Ein zweiter Aspekt der Erfindung betrifft ein Fahrzeug, insbesondere ein Kraftfahrzeug mit einer Vorrichtung, wie vorstehend beschrieben.

Ein dritter Aspekt der Erfindung betrifft ein Verfahren zur Steuerung eines Abschattungssystems für ein Fahrzeug, mit dem eine Heckscheibe und/oder eine oder mehrere Seitenscheiben des Fahrzeugs abschattbar/verdunkelbar sind. Das Verfahren umfasst folgende Schritte. In einem Schritt erfolgt mit einem ein Kamerasystem ein Erfassen von Bilddaten BD1 vom Kopf und/oder einer Körperhaltung eines Fahrers des Fahrzeugs. In einem weiteren Schritt erfolgt mit einer Auswerteeinrichtung ein Auswerten der Bilddaten BD1, um eine Blickrichtung BR(t) des Fahrers zu ermitteln, entweder als Funktion F einer auf Basis der Bilddaten BD1 ermittelten aktuellen Pose POSE_{K}(t) des Kopfes und/oder der Körperhaltung des Fahrers : BR(t) = F(POSE_{K}(t)) und/oder als Funktion F2 von auf Basis von in den Bilddaten BD1 ermittelten Augenpositionen AP(t) des Fahrers: BR(t) = F2(AP(t)). In einem weiteren Schritt erfolgt mit einer Steuereinheit unter folgenden Bedingungen: - die ermittelte aktuelle Blickrichtung BR(t) des Fahrers ergibt ein Blicken in einen Innenraumrückspiegel des Fahrzeugs oder ein Blicken in Richtung Heckscheibe oder ein Blicken in Richtung einer der Seitenscheiben, - ein Rückwärtsgang des Fahrzeugs ist eingelegt/aktiviert, und - das Fahrzeug ist in Betrieb/aktiviert, ein Ansteuern des Abschattungssystems derart, dass eine aktuelle Abschattung/Verdunkelung der Heckscheibe und/oder eine aktuelle Abschattung/Verdunkelung derjenigen Seitenscheibe, die in Blickrichtung BR(t) des Fahrers liegt, aufgehoben/abgeschaltet wird.

Eine vorteilhafte Weiterbildung des vorgeschlagenen Verfahrens zeichnet sich dadurch aus, dass das Abschattungssystem nur dann dazu angesteuert wird eine aktuelle Abschattung/Verdunkelung der Heckscheibe aufzuheben/abzuschalten, wenn in den Bilddaten BD1 ermittelt wird, dass der Fahrer, sofern das Fahrzeug ein Linkslenkerfahrzeug ist, über seine rechte Schulter nach hinten in Richtung Heckscheibe blickt, oder sofern das Fahrzeug ein Rechtslenkerfahrzeug ist, der Fahrer über seine linke Schulter nach hinten in Richtung Heckscheibe blickt.

Eine vorteilhafte Weiterbildung des vorgeschlagenen Verfahrens zeichnet sich dadurch aus, dass die Steuereinheit im Fall, dass die Blickrichtung BR(t) in Richtung Heckscheibe oder in Richtung Innenraumrückspiegel gerichtet ist, aktuell ausgefahrene Kopfstützen, die Sitzen im Fond des Fahrzeugs zugeordnet sind, einfährt/ ein/zurückklappt.

Eine vorteilhafte Weiterbildung des vorgeschlagenen Verfahrens zeichnet sich dadurch aus, dass das Kamerasystem Bilddaten BD2 von einer Sitzbelegung SB(t) von Sitzen im Fond des Fahrzeugs zu erfasst, die Auswerteeinrichtung die Bilddaten BD2 auswertet, um die aktuelle Sitzbelegung SB_{PERS}(t) durch Personen auf den Sitzen im Fond zu ermitteln, und die Steuereinheit im Fall, dass die Blickrichtung BR(t) in Richtung Heckscheibe oder in Richtung Innenraumrückspiegel gerichtet ist, aktuell ausgefahrene/ausgeklappte Kopfstützen, die Sitzen im Fond des Fahrzeugs zugeordnet sind für diejenigen Sitze im Fond einfährt/ einklappt, die nicht mit einer Person besetzt sind.

Eine vorteilhafte Weiterbildung des Verfahrens zeichnet sich dadurch aus, dass ein Regensensor vorhanden ist, der bei Regen ein Signal erzeugt, und die Steuereinheit bei Vorliegen dieses Signals einen der Heckscheibe zugeordneten Scheibenwischer aktiviert.

Eine vorteilhafte Weiterbildung des Verfahrens zeichnet sich dadurch aus, dass die Steuereinheit eine aufgehobene/abgeschaltete Abschattung/Verdunkelung wieder herstellt/einschaltet, wenn im Fahrzeug ein Vorwärtsgang eingelegt wird und/oder wenn das Fahrzeug in Vorwärtsrichtung eine vorgegebene Geschwindigkeitsschwelle überschreitet.

Eine vorteilhafte Weiterbildung des Verfahrens zeichnet sich dadurch aus, dass die Steuereinheit eine aufgehobene/abgeschaltete Abschattung/Verdunkelung wieder herstellt/einschaltet, wenn eine Zündung des Fahrzeugs auf "Aus" gestellt wird und/oder eine Parkbremse des Fahrzeugs gesetzt wird.

Eine vorteilhafte Weiterbildung des Verfahrens zeichnet sich dadurch aus, dass die Steuereinheit im Fall, dass die Blickrichtung BR(t) in Richtung Heckscheibe oder in Richtung Innenraumrückspiegel gerichtet ist, eine Helligkeit einer Innenraumbeleuchtung des Fahrzeugs reduziert.

Eine vorteilhafte Weiterbildung des Verfahrens zeichnet sich dadurch aus, dass die Steuereinheit eine reduzierte Helligkeit der Innenraumbeleuchtung wieder auf den ursprünglichen Wert erhöht, wenn im Fahrzeug ein Vorwärtsgang eingelegt wird und/oder wenn das Fahrzeug in Vorwärtsrichtung eine vorgegebene Geschwindigkeitsschwelle überschreitet.

Eine vorteilhafte Weiterbildung des Verfahrens zeichnet sich dadurch aus, dass die Steuereinheit eine reduzierte Helligkeit der Innenraumbeleuchtung wieder auf den ursprünglichen Wert erhöht, wenn eine Zündung des Fahrzeugs auf "Aus" gestellt wird und/oder eine Parkbremse des Fahrzeugs gesetzt wird.

Weitere Vorteile, Merkmale und Einzelheiten ergeben sich aus der nachfolgenden Beschreibung, in der - gegebenenfalls unter Bezug auf die Zeichnungen - zumindest ein Ausführungsbeispiel im Einzelnen beschrieben ist. Gleiche, ähnliche und/oder funktionsgleiche Teile sind mit gleichen Bezugszeichen versehen.

Es zeigen:
- Fig. 1: einen stark schematisierten Aufbau einer vorgeschlagenen Vorrichtung, sowie
- Fig. 2: einen stark schematisierten Ablaufplan eines vorgeschlagenen Verfahrens.

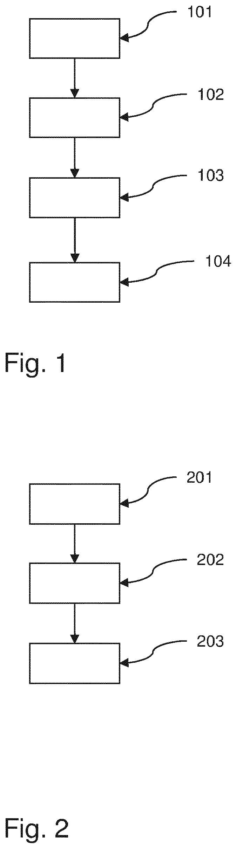

Fig. 1 zeigt einen stark schematisierten Aufbau einer vorgeschlagenen Vorrichtung zur Steuerung eines Abschattungssystems 101 für ein Kraftfahrzeug, mit dem eine Heckscheibe des Kraftfahrzeugs abschattbar/verdunkelbar ist, umfassend: ein Kamerasystem 102 zur Erfassung von Bilddaten BD1 vom Kopf und Körperhaltung eines Fahrers des Kraftfahrzeugs und eine Auswerteeinrichtung 103 zur Auswertung der Bilddaten BD1, um eine Blickrichtung BR(t) des Fahrers zu ermitteln, als Funktion F einer auf Basis der Bilddaten BD1 ermittelten aktuellen Pose POSE_{K}(t) des Kopfes und/oder Körperhaltung des Fahrers : BR(t) = F(POSE_{K}(t)).

Weiterhin umfasst die Vorrichtung eine Steuereinheit 104, die dazu eingerichtet und ausgeführt ist unter folgenden Bedingungen:
- die ermittelte aktuelle Blickrichtung BR(t) des Fahrers ergibt ein Blicken in einen Innenraumrückspiegel des Kraftfahrzeugs oder ein Blicken in Richtung Heckscheibe,
- ein Rückwärtsgang des Kraftfahrzeugs ist eingelegt/aktiviert, und
- das Kraftfahrzeug ist in Betrieb/aktiviert,
das Abschattungssystem 101 derart anzusteuern, dass eine aktuelle Abschattung/Verdunkelung der Heckscheibe aufgehoben/abgeschaltet wird.

Das Abschattungssystem 101 kann an der Heckscheibe als Heckrollo, als Heckscheibe mit variabel einstellbarer Transmission, als Heckscheibe mit intelligentem Glas (S BD-Glas) oder als intelligente Anzeigeeinrichtung (engl. "Smart Window"), bei dem die Heckscheibe als ein auf transparent schaltbares Display ausgeführt ist.

Fig. 2 zeigt einen stark schematisierten Ablaufplan eines vorgeschlagenen Verfahrens zur Steuerung eines Abschattungssystems 101 für ein Kraftfahrzeug, mit dem eine Heckscheibe des Kraftfahrzeugs abschattbar/verdunkelbar sind, umfassend folgende Schritte.

In einem Schritt 201 erfolgt mit einem ein Kamerasystem 102 ein Erfassen von Bilddaten BD1 vom Kopf eines Fahrers des Kraftfahrzeugs.

In einem Schritt 202 erfolgt mit einer Auswerteeinrichtung 103 ein Auswerten der Bilddaten BD1, um eine Blickrichtung BR(t) des Fahrers zu ermitteln, als Funktion F einer auf Basis der Bilddaten BD1 ermittelten aktuellen Pose POSE_{K}(t) des Kopfes des Fahrers : BR(t) = F(POSE_{K}(t)).

In einem Schritt 203 erfolgt mit einer Steuereinheit 104 unter folgenden Bedingungen:
- die ermittelte aktuelle Blickrichtung BR(t) des Fahrers ergibt ein Blicken in einen Innenraumrückspiegel des Kraftfahrzeugs oder ein Blicken in Richtung Heckscheibe,
- ein Rückwärtsgang des Kraftfahrzeugs ist eingelegt/aktiviert, und
- das Kraftfahrzeug ist in Betrieb/aktiviert,
ein Ansteuern des Abschattungssystems 101 derart, dass eine aktuelle Abschattung/Verdunkelung der Heckscheibe aufgehoben/abgeschaltet wird.

## Patentansprüche

1. Vorrichtung zur Steuerung eines Abschattungssystems (101) für ein Fahrzeug, mit dem eine Heckscheibe und/oder eine oder mehrere Seitenscheiben des Fahrzeugs abschattbar/verdunkelbar sind, umfassend:
- ein Kamerasystem (102) zur Erfassung von Bilddaten BD1 vom Kopf und/oder Körperhaltung eines Fahrers des Fahrzeugs,
- eine Auswerteeinrichtung (103) zur Auswertung der Bilddaten BD1, um eine Blickrichtung BR(t) des Fahrers zu ermitteln, entweder als Funktion F einer auf Basis der Bilddaten BD1 ermittelten aktuellen Pose POSE_{K}(t) des Kopfes und/oder der Körperhaltung des Fahrers: BR(t) = F(POSE_{K}(t)) und/oder als Funktion F2 von auf Basis von in den Bilddaten BD1 ermittelten Augenpositionen AP(t) des Fahrers: BR(t) = F2(AP(t)), **gekennzeichnet, durch**
- eine Steuereinheit (104), die dazu eingerichtet und ausgeführt ist unter folgenden Bedingungen:
- die ermittelte aktuelle Blickrichtung BR(t) des Fahrers ergibt ein Blicken in einen Innenraumrückspiegel des Fahrzeugs oder ein Blicken in Richtung Heckscheibe oder ein Blicken in Richtung einer der Seitenscheiben, und
- ein Rückwärtsgang des Fahrzeugs ist eingelegt/aktiviert, und
- das Fahrzeug ist in Betrieb/aktiviert,
das Abschattungssystem (101) derart anzusteuern, dass eine aktuelle Abschattung/Verdunkelung der Heckscheibe und/oder eine aktuelle Abschattung/Verdunkelung derjenigen Seitenscheibe, die in Blickrichtung BR(t) des Fahrers liegt, aufgehoben/abgeschaltet wird.

2. Vorrichtung nach Anspruch 1,
bei der die Steuereinheit (103) dazu ausgeführt und eingerichtet ist, im Fall, dass die Blickrichtung BR(t) in Richtung Heckscheibe oder in Richtung Innenraumrückspiegel gerichtet ist, aktuell ausgefahrene Kopfstützen, die Sitzen im Fond des Fahrzeugs zugeordnet sind, einzufahren/ einzuklappen.

3. Vorrichtung nach einem der Ansprüche 1 bis 2,
bei der
- das Kamerasystem (101) dazu ausgeführt und eingerichtet ist, Bilddaten BD2 von einer Sitzbelegung SB(t) von Sitzen im Fond des Fahrzeugs zu erfassen,
- die Auswerteeinrichtung (102) dazu ausgeführt und eingerichtet ist, die Bilddaten BD2 auszuwerten, um die aktuelle Sitzbelegung SB_{PERS}(t) durch Personen auf den Sitzen im Fond zu ermitteln, und
- die Steuereinheit (103) dazu ausgeführt und eingerichtet ist, im Fall, dass die Blickrichtung BR(t) in Richtung Heckscheibe oder in Richtung Innenraumrückspiegel gerichtet ist, aktuell ausgefahrene Kopfstützen, die Sitzen im Fond des Fahrzeugs zugeordnet sind für diejenigen Sitze im Fond einzufahren/ einzuklappen, die nicht mit einer Person besetzt sind.

4. Vorrichtung nach einem der Ansprüche 1 bis 3,
bei der die Steuereinheit (103) dazu ausgeführt und eingerichtet ist, eine aufgehobene/abgeschaltete Abschattung/Verdunkelung wieder herzustellen/einzuschalten, wenn im Fahrzeug ein Vorwärtsgang eingelegt wird und/oder wenn das Fahrzeug in Vorwärtsrichtung eine vorgegebene Geschwindigkeitsschwelle überschreitet oder wenn eine Zündung des Fahrzeugs auf "Aus" gestellt wird und/oder eine Parkbremse des Fahrzeugs gesetzt wird.

5. Vorrichtung nach einem der Ansprüche 2 bis 4,
bei der die Steuereinheit (103) dazu ausgeführt und eingerichtet ist, sobald eine Person im Fond sitzt dem Sitzplatz der Person zugehörige eingefahrene oder eingeklappte Kopfstützen entsprechend einer erfassten Körpergröße der Person wieder auszufahren/auszuklappen.

6. Vorrichtung nach einem der Ansprüche 1 bis 5,
bei der die Steuereinheit (103) dazu ausgeführt und eingerichtet ist, im Fall, dass die Blickrichtung BR(t) in Richtung Heckscheibe oder in Richtung Innenraumrückspiegel gerichtet ist, eine Helligkeit einer Innenraumbeleuchtung des Fahrzeugs zu reduzieren.

7. Vorrichtung nach Anspruch 6,
bei der die Steuereinheit (103) dazu ausgeführt und eingerichtet ist, eine reduzierte Helligkeit der Innenraumbeleuchtung wieder auf den ursprünglichen Wert zu erhöhen, wenn im Fahrzeug ein Vorwärtsgang eingelegt wird und/oder wenn das Fahrzeug in Vorwärtsrichtung eine vorgegebene Geschwindigkeitsschwelle überschreitet.

8. Vorrichtung nach Anspruch 6 oder 7,
bei der die Steuereinheit (103) dazu ausgeführt und eingerichtet ist, eine reduzierte Helligkeit der Innenraumbeleuchtung wieder auf den ursprünglichen Wert zu erhöhen, wenn eine Zündung des Fahrzeugs auf "Aus" gestellt wird und/oder eine Parkbremse des Fahrzeugs gesetzt wird.

9. Fahrzeug mit einer Vorrichtung nach einem der Ansprüche 1 bis 8.

10. Verfahren zur Steuerung eines Abschattungssystems (101) für ein Fahrzeug, mit dem eine Heckscheibe und/oder eine oder mehrere Seitenscheiben des Fahrzeugs abschattbar/verdunkelbar sind, umfassend folgende Schritte:
- mit einem ein Kamerasystem (102) Erfassen (201) von Bilddaten BD1 vom Kopf und/oder Körperhaltung eines Fahrers des Fahrzeugs,
- mit einer Auswerteeinrichtung (103) Auswerten (202) der Bilddaten BD1, um eine Blickrichtung BR(t) des Fahrers zu ermitteln, entweder als Funktion F einer auf Basis der Bilddaten BD1 ermittelten aktuellen Pose POSE_{K}(t) des Kopfes und/oder Körperhaltung des Fahrers: BR(t) = F(POSE_{K}(t)) und/oder als Funktion F2 von auf Basis von in den Bilddaten BD1 ermittelten Augenpositionen AP(t) des Fahrers: BR(t) = F2(AP(t)), **gekennzeichnet durch**
- mit einer Steuereinheit (104) unter folgenden Bedingungen:
- die ermittelte aktuelle Blickrichtung BR(t) des Fahrers ergibt ein Blicken in einen Innenraumrückspiegel des Fahrzeugs oder ein Blicken in Richtung Heckscheibe oder ein Blicken in Richtung einer der Seitenscheiben, und
- ein Rückwärtsgang des Fahrzeugs ist eingelegt/aktiviert, und
- das Fahrzeug ist in Betrieb/aktiviert,
ein Ansteuern (203) des Abschattungssystems (101) derart, dass eine aktuelle Abschattung/Verdunkelung der Heckscheibe und/oder eine aktuelle Abschattung/Verdunkelung derjenigen Seitenscheibe, die in Blickrichtung BR(t) des Fahrers liegt, aufgehoben/abgeschaltet wird.

## Claims

1. Device for controlling a shadowing system (101) for a motor vehicle, in which a rear window and/or one or more side windows of the vehicle can be shadowed/shaded, comprising:
- a camera system (102) for capturing image data BD1 from the head and/or the posture of a driver of the vehicle,
- an evaluation device (103) for evaluating the image data BD1 in order to determine a line of sight BR(t) of the driver, either as a function F of a current pose POSE_{K}(t) of the head determined on the basis of the image data BD1 and/or the posture of the driver BR(t) = F(POSE_{K}(t)), and/or as a function F2 of eye positions AP(t) of the driver BR(t) = F2(AP(t)) determined on the basis of the image data BD1, **characterised by**
- a control unit (1104) arranged and designed to control the shadowing system (101) in such a way under the following conditions:
- the determined current line of sight BR(t) of the driver amounts to a glance into an interior rear-view mirror of the vehicle or a glance towards the rear window or a glance towards one of the side windows,
- a reverse gear of the vehicle is engaged/activated, and
- the vehicle is in operation/activated,
- that a current shadowing/shading of the rear window and/or a current shadowing/shading of the side window in the line of sight BR(t) of the driver is cancelled/disabled.

2. Device according to claim 1,
in which the control unit (103) is designed and arranged to retract/fold up currently extended headrests assigned to seats in the rear of the vehicle if the line of sight BR(t) is oriented towards the rear window or towards an interior rear-view mirror.

3. Device according to any of claims 1 or 2,
in which
- the camera system (101) is designed and arranged to capture image data BD2 of a seat occupancy SB(t) of seats in the rear of the vehicle,
- the evaluation system (101) is designed and arranged to evaluate the image data BD2 in order to determine the current seat occupancy SB_{PERS}(t) by persons on the seats in the rear, and
- the control unit (103) is designed and arranged to retract/fold up currently extended headrests assigned to seats in the rear of the vehicle for those seats which are not occupied by a person if the line of sight BR(t) is oriented towards the rear window or towards an interior rear-view mirror.

4. Device according to any of claims 1 to 3,
in which the control unit (103) is designed and arranged to re-establish/enable a cancelled/disabled shadowing/shading if a forward gear is engaged in the vehicle and/or if the vehicle exceeds a predetermined speed threshold in the forward direction or if an ignition of the vehicle is set to "off" and/or a parking brake of the vehicle is applied.

5. Device according to any of claims 2 to 4,
in which the control unit (103) is designed and arranged to extend/unfold, as soon as a person is sitting in the rear, retracted or folded headrests belonging to the seat of the respective person in accordance with a detected body size of the person.

6. Device according to any of claims 1 to 5,
in which the control unit (103) is designed and arranged to reduce a brightness of an interior illumination of the vehicle if the line of sight BR(t) is oriented towards the rear window or towards an interior rear-view mirror.

7. Device according to claim 6,
in which the control unit (103) is designed and arranged to increase a reduced brightness of the interior illumination to the original value if a forward gear is engaged in the vehicle and/or if the vehicle exceeds a predetermined speed threshold in the forward direction.

8. Device according to claim 6 or 7,
in which the control unit (103) is designed and arranged to increase a reduced brightness of the interior illumination to the original value if an ignition of the vehicle is set to "off' and/or a parking brake of the vehicle is applied.

9. Vehicle with a device according to any of claims 1 to 8.

10. Method for controlling a shadowing system (101) for a motor vehicle, in which a rear window and/or one or more side windows of the vehicle can be shadowed/shaded, comprising the following steps:
- the detection (201) of image data BD1 of the head and/or the posture of a driver of the vehicle with a camera system (102),
- the evaluation (202) of the image data BD1 in order to determine a line of sight BR(t) of the driver, either as a function F of a current pose POSE_{K}(t) of the head determined on the basis of the image data BD1 and/or the posture of the driver BR(t) = F(POSE_{K}(t)), and/or as a function F2 of eye positions AP(t) of the driver BR(t) = F2(AP(t)) determined on the basis of the image data BD1 with an evaluation device (103), **characterised by**
- with a control unit (104) under the following conditions:
- the determined current line of sight BR(t) of the driver amounts to a glance into an interior rear-view mirror of the vehicle or a glance towards the rear window or a glance towards one of the side windows,
- a reverse gear of the vehicle is engaged/activated, and
- the vehicle is in operation/activated,
- an activation (203) of the shadowing system (101) in such a way that a current shadowing/shading of the rear window and/or a current shadowing/shading of the side window in the line of sight BR(t) of the driver is cancelled/disabled.

## Revendications

1. Dispositif de commande d'un système d'ombrage (101) pour un véhicule à moteur grâce auquel une lunette arrière et/ou une ou plusieurs vitres latérales du véhicule à moteur peuvent être recouvertes ou obscurcies, ledit dispositif comprenant :
- un système de caméra (102) permettant de détecter des données d'image BD1 de la tête et/ou du port de la tête d'un conducteur du véhicule à moteur,
- un dispositif d'évaluation (103) permettant d'évaluer les données d'image BD1, pour déterminer la direction du regard BR(t) du conducteur, soit en tant que fonction F d'une pose actuelle POSEₖ(t) de la tête et/ou de la tenue du corps du conducteur : BR(t) = F(POSEₖ(t)) déterminée sur la base des données d'image BD1 et/ou en tant que fonction F2 des positions des yeux AP(t) du conducteur : BR(t) = F2(AP(t)) déterminées sur la base des données d'image BD1, **caractérisé par**
- une unité de commande (104) qui est conçue et agencée dans les conditions suivantes :
- la direction du regard BR(t) actuelle déterminée du conducteur résulte d'un regard dans un rétroviseur intérieur du véhicule ou d'un regard dans la direction de la lunette arrière ou d'un regard dans la direction d'une des vitres latérales,
et
- une marche arrière du véhicule à moteur est enclenchée/activée, et
- le véhicule à moteur est en fonctionnement/activé,
pour commander le système d'ombrage (101) de sorte qu'un ombrage/obscurcissement actuel de la lunette arrière et/ou un ombrage/obscurcissement actuel de la vitre latérale respective, qui se trouve dans la direction du regard BR(t) du conducteur, soit supprimé/éteint.

2. Dispositif selon la revendication 1,
dans lequel l'unité de commande (103) est conçue et agencée pour, dans le cas où la direction du regard BR(t) est dirigé en direction de la lunette arrière ou dans la direction du rétroviseur intérieur, escamoter/relever les appuie-têtes actuellement sortis, les sièges dans le fond du véhicule.

3. Dispositif selon l'une quelconque des revendications 1 à 2,
dans lequel
- le système de caméra (101) est conçu et agencé pour détecter les données d'image BD2 d'une occupation de siège SB(t) des sièges dans le fond du véhicule à moteur,
- le dispositif d'évaluation (102) est conçu et agencé pour évaluer les données d'images BD2 pour déterminer l'occupation actuelle de siège SB_{PERS}(t) par des personnes sur les sièges dans le fond, et
- l'unité de commande (103) est conçue et agencée pour, dans le cas où la direction du regard BR(t) est dirigée dans la direction de la lunette arrière ou dans la direction du rétroviseur intérieur, escamoter/relever les appuie-têtes actuellement sortis qui sont associés aux sièges dans le fond du véhicule pour les sièges respectifs dans le fond qui ne sont pas occupés par une personne.

4. Dispositif selon l'une quelconque des revendications 1 à 3,
dans lequel l'unité de commande (103) est conçue et agencée pour produire/allumer à nouveau un ombrage/obscurcissement éteint/supprimé lorsque dans le véhicule à moteur est enclenchée une marche avant et/ou lorsque le véhicule à moteur dans la direction de marche avant passe au-dessus d'un seuil de vitesse prédéfini ou lorsqu'un allumage du véhicule à moteur est mis sur « arrêt » et/ou qu'un frein de stationnement du véhicule à moteur est serré.

5. Dispositif selon l'une quelconque des revendications 2 à 4,
dans lequel dès qu'une personne s'assoit dans le fond, l'unité de commande (103) est conçue et agencée pour sortir/déployer à nouveau l'appuie-tête entré ou escamoté appartenant à la place assise de la personne en fonction de la taille détectée de la personne.

6. Dispositif selon l'une quelconque des revendications 1 à 5,
dans lequel l'unité de commande (103) est conçue et agencée pour, dans le cas où, la direction du regard BR(t) est dirigée dans la direction de la lunette arrière ou dans la direction du rétroviseur intérieur, réduire la luminosité d'un éclairage intérieur du véhicule à moteur.

7. Dispositif selon la revendication 6,
dans lequel l'unité de commande (103) est conçue et agencée pour augmenter à nouveau une luminosité réduite de l'éclairage de l'habitacle à la valeur initiale lorsque dans le véhicule une marche avant est enclenchée et/ou lorsque le véhicule à moteur passe au-dessus d'un seuil de vitesse prédéfinie dans la direction de marche avant.

8. Dispositif selon l'une quelconque des revendications 6 ou 7,
dans lequel l'unité de commande (103) est conçue et agencée pour augmenter une luminosité réduite de l'éclairage de l'habitacle à nouveau à la valeur initiale lorsqu'un allumage du véhicule est placé sur « arrêt » et/ou qu'un frein de stationnement du véhicule à moteur est serré.

9. Véhicule à moteur comprenant un dispositif selon l'une quelconque des revendications 1 à 8.

10. Procédé de commande d'un système d'ombrage (101) pour un véhicule à moteur, grâce auquel une lunette arrière et/ou une ou plusieurs vitres latérales du véhicule à moteur peuvent être assombries ou obscurcies, ledit procédé comprenant les étapes suivantes consistant à :
- à l'aide d'un système de caméra (102), détecter (201) des données d'image BD1 de la tête et/ou de la tenue du corps d'un conducteur du véhicule à moteur,
- à l'aide d'un dispositif d'évaluation (103), évaluer (202) les données d'image BD1, pour déterminer la direction du regard BR(t) du conducteur, soit en tant que fonction F d'une pose POSEₖ(t) actuelle de la tête et/ou de la tenue du corps du conducteur : BR(t) = F(POSEₖ(t)) déterminée sur la base des données d'image BD1 et/ou en tant que fonction F2 des positions des yeux AP(t) du conducteur : BR(t) = F2(AP(t)) déterminées sur la base des données d'image BD1, **caractérisé par**
- à l'aide d'une unité de commande (104) dans les conditions suivantes :
- la direction du regard BR(t) actuelle déterminée du conducteur résulte d'un regard dans un rétroviseur intérieur du véhicule à moteur ou d'un regard en direction de la lunette arrière ou d'un regard en direction d'une des vitres latérales, et
- une marche arrière du véhicule à moteur est enclenchée/activée, et
- le véhicule à moteur est en fonctionnement/activé,
une commande (203) du système d'ombrage (101) de sorte qu'un ombrage/obscurcissement de la lunette arrière et/ou un ombrage/obscurcissement actuel de la vitre latérale respective, qui se trouve dans la direction du regard BR(t) du conducteur, est supprimé/éteint.
